(19) Europäisches Patentamt
European Patent Office
Office européen des brevets

(11) Veröffentlichungsnummer: **0 302 404**
**B1**

(12) # EUROPÄISCHE PATENTSCHRIFT

(45) Veröffentlichungstag der Patentschrift: **28.11.90**

(51) Int. Cl.⁵: **E21B 43/22**

(21) Anmeldenummer: **88112296.4**

(22) Anmeldetag: **29.07.88**

(54) **Wässrige Tensideinstellungen und deren Verwendung bei der Erdölförderung.**

(30) Priorität: **05.08.87 DE 3725938**

(43) Veröffentlichungstag der Anmeldung: **08.02.89 Patentblatt 89/6**

(45) Bekanntmachung des Hinweises auf die Patenterteilung: **28.11.90 Patentblatt 90/48**

(84) Benannte Vertragsstaaten: **BE DE FR GB NL**

(56) Entgegenhaltungen:
**US-A- 3 890 239**
**US-A- 4 077 471**

(73) Patentinhaber: **HOECHST AKTIENGESELLSCHAFT, Postfach 80 03 20, D-6230 Frankfurt am Main 80(DE)**

(72) Erfinder: **Miller, Dennis, Dr., Waldallee 73, D-6239 Eppstein/Taunus(DE)**

**EP 0 302 404 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der Förderung von Erdöl erhält man normalerweise nur einen geringen Anteil des in der Lagerstätte vorhandenen Erdöls. Um die Ausbeute zu erhöhen, preßt man Wasser in die Lagerstätte ein - sog. Wasserfluten - oder man preßt eine wäßrige Tensidlösung ein - sog. Tensidfluten. Bei diesem Tensidfluten wird das Tensid als wäßrige Lösung oder Dispersion in die Lagerstätte injiziert. Voraussetzung hierfür ist, daß diese Lösungen oder Dispersionen stabil sind. Es hat sich außerdem als besonders günstig für die Entölung erwiesen, wenn diese Lösungen oder Dispersionen in der Lagerstätte mit dem Öl Mikroemulsionen bilden. Die Art der beim Tensidfluten brauchbaren Tenside hängt von den speziellen Bedingungen der Lagerstätte ab, so etwa von der Temperatur, der Art des Gesteins und der Zusammensetzung des Rohöls. Besonders wichtig ist dabei die Salinität der Lagerstätte, da sich höhere Salzgehalte negativ auf die Stabilität und Homogenität der Tensidlösung auswirken und dadurch die Wirksamkeit der Tensidlösung beeinträchtigen. Wenn eine Tensidmischung genommen wird, müssen deren Einzelverbindungen gleichmäßig gut auf dem Gestein der Lagerstätte adsorbiert werden. Andernfalls erfolgt eine Art chromatographische Trennung des Gemischs, die eine Änderung in der Zusammensetzung des Gemischs bewirkt und damit deren Wirksamkeit beeinträchtigt.

Es ist bereits bekannt, beim Tensidfluten Alkylphenolpolyglykolethersulfonate allein oder zusammen mit anderen Sulfonaten, wie z.B. Alkansulfonate, zu nehmen (US-A 4 018 278). Eine verbesserte Wirkung wird erreicht, wenn man diese Verbindungen mit anderen Tensiden kombiniert, beispielsweise mit oxalkylierten aliphatischen Alkoholen (US-A 4 077 471 und US-A 4 269 271).

Es wurde nun gefunden, daß Tensidmischungen auf der Basis von Alkylphenolpolyglykolethersulfonaten sowohl stabile wäßrige Lösungen oder Dispersionen bilden als auch mit dem Öl eine Mikroemulsion bilden, wenn sie zusätzlich andere Sulfonate und Fettalkohole oder bestimmte oxalkylierte Alkohole oder Alkylphenole enthalten. Die Einzelkomponenten dieses Gemischs werden ungefähr gleich gut auf Quarz adsorbiert.

Gegenstand der Erfindung sind wäßrige Tensideinstellungen enthaltend ein Tensidgemisch aus

a) 5 bis 80, vorzugsweise 10 bis 70 Gew.-% eines Ethersulfonats der Formel

$RO(AO)_mA'SO_3M$

wobei R $C_6$-$C_{20}$-Alkyl oder eine durch ein oder mehrere Alkylgruppen mit zusammen 6 bis 20 C-Atomen substituierte Phenylgruppe, A eine $-C_2H_4-$ oder $-C_3H_6-$Gruppe oder eine Mischung beider Gruppen, A' - $C_2H_4$ - oder $-C_3H_6-$, m eine Zahl von 6 bis 25, vorzugsweise von 8 bis 20 und M ein Alkalimetallatom oder Ammonium bedeuten,

b) 10 bis 90, vorzugsweise 25 bis 80 Gew.-% eines sek. $C_8$-$C_{22}$-Alkansulfonats, Petrolsulfonats, Olefinsulfonats oder deren Mischungen und

c) 2 bis 40, vorzugsweise 5 bis 30 Gew.-% eines $C_8$-$C_{22}$-Fettalkohols oder eines Polyglykolethers der Formel

$RO(AO)_nH$

wobei R $C_6$-$C_{20}$-Alkyl oder eine durch ein oder mehrere Alkylgruppen mit zusammen 6 bis 20 C-Atomen substituierte Phenylgruppe, A eine $-C_2H_4-$ oder $-C_3H_6-$Gruppe oder eine Mischung beider Gruppen und n eine Zahl von 1 bis (m-4) bedeuten, wobei die Anzahl der Oxalkyleinheiten in der Komponente c) um mindestens vier Einheiten geringer sein soll gegenüber den Oxalkyleinheiten in der Komponente a).

Die Anzahl der Oxalkyleinheiten in der Komponente c) soll vorzugsweise um mindestens 5 Einheiten geringer sein gegenüber den Oxalkyleinheiten in der Komponente a) (n eine Zahl von 1 bis m-5).

Der Gesamttensidgehalt in der beschriebenen wäßrigen Einstellung liegt bei 20 bis 80 Gew.-%. Diese wäßrigen Einstellungen werden für das Tensidfluten weiter mit Wasser verdünnt auf einen Gehalt an Tensid von 0,1 bis 10 Gew.-%. Vorzugsweise nimmt man hierfür das mehr oder weniger salzhaltige Wasser aus der Lagerstätte.

Zur Verbesserung der Wirkung kann man dem Flutwasser auch noch Rohöl bzw. Kohlenwasserstoffe oder $C_3$-$C_6$-Alkohole zusetzen. Eine Rohölförderung durch Tensidfluten auf der Grundlage der oben beschriebenen Tensidmischung kann in üblicher Weise mit einem Polymerfluten verbunden werden. Das oben beschriebene Drei-Komponenten-System zeichnet sich dadurch aus, daß es in Wasser phasenstabil ist und außerdem mit dem Rohöl Mikroemulsionen bildet. Diese Eigenschaften zeigen sich auch in hochsalinen Wässern, etwa mit einem Salzgehalt von mehr als 10 %. Dadurch, daß hier die Polyglykolether (Komponente c) einen geringeren Gehalt an Alkylenoxid haben als die Ethersulfate (Komponente a) erreicht man eine Verbesserung der Phasenstabilität.

Im Gegensatz dazu werden in der US-A 4 077 471 nur solche Mischungen aus Alkyl- bzw. Alkylphenylethersulfonaten und den entsprechenden Polyglykolethern beschrieben, die jeweils ungefähr gleiche Mengen an Alkylenoxid enthalten.

Experimenteller Teil

Prüfung des Phasenverhaltens

Für diese Prüfung wurden verschiedene Tensid/Salzwasser Mischungen mit unterschiedlicher Salinität hergestellt.
Nach guter Durchmischung wurden die Proben für 24 Stunden temperiert. Man unterscheidet drei Typen von Phasenverhalten

a) klare Lösung
b) Phasentrennung
c) transparente oder trübe homogene Dispersion.

Für Mikroemulsionsversuche wurden gleiche Mengen Öl und Salzwasser genommen und man beobachtete den Salinitätsbereich in dem sich das Gemisch in die drei Phasen Salzwasser, Mikroemulsion und Öl trennte.

Als Salz wurde entweder NaCl oder ein Modell-Lagerstättensalz bestehend aus 95 % NaCl, 3 % $CaCl_2$, 1,75 % $MgCl_2$ und 0,25 % $Na_2SO_4$ benutzt.
Petroleum mit einem Siedebereich 190-206°C diente als Modellöl.
Der Tensidgehalt betrug 2 % bezogen auf das Salzwasser.

**Adsorption auf Quarz**

Methode: Mehrere Proben bestehend aus 1000 ppm Tensidlösung wurden 24 Stunden mit Quarzsand, (Oberfläche ca. 0,13 $m^2/g$) equilibriert. Die Quarzmenge betrug bis zu 0,35 g pro ml Lösung. Die Flüssigkeit wurde dann abgetrennt und mit den folgenden Methoden analysiert:

a) Zwei-Phasen-Titration zur Bestimmung von anionischen Tensiden
b) U.V.-Adsorption zur Bestimmung von aromatischen Verbindungen
c) Colorimetrische Bestimmung des Komplexes mit $CoCl_2$ und $NH_4SCN$ nach der Extraktion in $C_2H_4Cl_2$. Dabei kann die Menge ethoxylierter Verbindungen gemessen werden.

Aus diesen drei Messungen kann man die Anteile der drei Tenside (einfaches Sulfonat, Ethersulfonat und Ethoxylat) berechnen. Diese Berechnung wird einfacher, wenn nur eines der Tenside einen aromatischen Ring enthält. Aus dem Tensidgehalt in Abhängigkeit von der Quarzmenge wird die Adsorption in mg Tensid pro g Quarz berechnet. Unter den hier verwendeten Versuchsbedingungen entspricht diese Adsorption in etwa dem Grenzwert. Um die Adsorption der verschiedenen Komponenten der Tensidmischung zu vergleichen, benutzt man am besten die spezifische Adsorption $a'_i$.

$$a'_i = \frac{a_i}{w_i}$$

wobei $a_i$ die Adsorption von Komponente i ist und $w_i$ deren Gewichtsanteil in der Tensidmischung. Wenn alle Komponenten denselben Wert von $a'_i$ hätten, gäbe es keine chromatographische Trennung der Tenside.

Beispiele

1. Phasenverhalten mit und ohne Öl

Das Phasenverhalten von Mischungen 1 - 3 wird in Abb. 1 - 3 in Abhängigkeit von der Temperatur und Salinität dargestellt.
Bei Fig. 1 (Mischung 1) und Fig. 2 (Mischung 2) benutzte man Modell-Lagerstättensalz. Bei Fig. 3 (Mischung 3) ist das Salz NaCl.
Die waagrecht schraffierte Fläche 1 bedeutet den Bereich einer stabilen und homogenen Tensid/Salzwasser Dispersion. Die senkrecht schraffierte Fläche 2 bedeutet Mikroemulsionsbildung mit Modellöl. Die Überlappung dieser beiden Bereiche zeigt, daß die Mischung für die tertiäre Erdölförderung wirksam ist. Bei Versuchen mit Mischung Nr. 3 und einem norddeutschen Rohöl anstelle des Modellöls fand man Mikroemulsionen im Salinitätsbereich 200 - 220 g/l bei 60°C.

2. Stabile homogene Tensid/Salzwasser Dispersionen

Die erfindungsgemäßen Mischungen 4-8 sind weitere Beispiele von Tensiden, die bei hoher Salinität stabile homogene Tensid/Salzwasser Dispersionen bilden - siehe Tabelle 1. Es wird betont, daß solche Dispersionen mit den Einzelkomponenten nicht erhalten werden können. Wird Komponente c) aus den Mischungen 4-6 weggelassen, so tritt Phasentrennung bei Salinitäten über etwa 80 g/l auf. Obwohl man allein mit einem genügend hydrophilen Ethersulfonat klare Lösungen auch bei hohen Salinitäten erhalten kann, sind solche Lösungen für die tertiäre Erdölförderung nicht von Interesse, denn sie bilden keine Mikroemulsion mit Öl. Das Alkansulfonat allein ist in Salzwasser unlöslich.
Überraschenderweise bildet Mischung Nr. 7, die weitgehend aus dieser Substanz besteht, eine hervorragend homogene Dispersion in Salzwasser. Diese Versuche zeigen die Wichtigkeit von Phasenstabilität und gleichzeitiger Bildung einer Mikroemulsion.

3. Einfluß der Komponente c).

Die Tensidmischungen 1 und 9-13 unterscheiden sich nur in der Länge der Ethylenoxidkette der Komponente c). Das Phasenverhalten der Tensid/Salzwasser Mischung bei 75°C wird in Fig. 4 in Abhängigkeit von n gezeigt. Das Salz ist Modell-Lagerstättensalz. Im Vergleich dazu sind unter 1 die entsprechenden Ergebnisse ohne Komponente c) angegeben. Das Phasenverhalten wird wie folgt bezeichnet: a klare Lösung, b Phasentrennung, c stabile homogene Dispersion.
Gemäß US-A-4 077 471 sollte bei diesen Tensidmischungen der günstigste Wert für n zwischen 10 und 12 liegen; überraschenderweise findet man aber, daß man erst dann eine stabile Phase bekommt, wenn der Wert für n auf Werte von weniger als etwa 7 absinkt, wenn also die Komponente c) deutlich weniger Alkylenoxid enthält als die Komponente a). Die Tensidmischungen 3, 5, 6 und 8 beschreiben die Verwendung von Fettalkoholen als dritte Komponente, was bisher nicht bekannt war.

4. Adsorption auf Quarz

Tabelle 2 zeigt die spezifische Adsorption der drei Tenside in den Mischungen 14 und 15. Zum Vergleich ist auch die spezifische Adsorption der drei Einzelverbindungen in destilliertem Wasser angegeben. Für sich allein zeigt der nicht-ionische Polyglykolether eine höhere Adsorption als das anionische Tensid. In der Mischung dagegen ist der Unterschied in der Adsorption beider Tenside sehr viel geringer. Dieser überraschende synergistische Effekt reduziert die Möglichkeit einer chromatographischen Trennung beider Tenside und verbessert so die Wirksamkeit dieser Mischungen beim Tensid-Fluten.

Erfindungsgemäße Tensidmischungen

| Nr. | Komponente a) | | | | | Komponente b) | Komponente c) | | | | |
|---|---|---|---|---|---|---|---|---|---|---|---|
| | | | | | | | Polyglykolether | | | | Fettalkohol |
| | % | R | A bzw. A' | m | % | Sek. Alkansulfonat | % | R | A | n | - |
| 1 | 43 | $C_9H_{19}C_6H_4-$ | $-CH_2-CH_2-$ | 12 | 28,5 | 15,5 C-Atome im Durchschnitt | 28,5 | $C_9H_{19}C_6H_4-$ | $-CH_2-CH_2-$ | 6 | - |
| 2 | 53 | $(C_4H_9)_3\ C_6H_2-$ | $-CH_2-CH_2-$ | 14 | 35 | " | 12 | $(C_4H_9)_3\ C_6H_2-$ | $-CH_2-CH_2-$ | 4 | - |
| 3 | 54,5 | $(C_4H_9)_3\ C_6H_2-$ | $-CH_2-CH_2-$ | 14 | 35,5 | " | 10 | - | - | - | $C_{16}H_{33}OH$ |
| 4 | 50 | $(C_4H_9)_3\ C_6H_2-$ | $-CH_2-CH_2-$ | 14 | 33 | " | 17 | $C_{12}H_{25}/C_{14}H_9$ | $-CH_2-CH_2-$ | 5 | - |
| 5 | 51 | $(C_4H_9)_3\ C_6H_2-$ | $-CH_2-CH_2-$ | 14 | 34 | " | 15 | - | - | - | $C_{12}H_{25}OH$ |
| 6 | 51 | $(C_4H_9)_3\ C_6H_2-$ | $-CH_2-CH_2-$ | 14 | 34 | " | 15 | - | - | - | $C_{18}H_{37}OH$ |
| 7 | 15 | $(C_4H_9)_3\ C_6H_2-$ | $-CH_2-CH_2-$ | 17 | 70 | " | 15 | $(C_4H_9)_3\ C_6H_2-$ | $-CH(CH_3)-CH_2-$ + $-CH_2-CH_2-$ 2:1 | 5 | - |
| 8 | 15 | $C_{18}H_{33}-$ | $-CH_2-CH_2-$ | 7,5 | 70 | " | 15 | - | | - | $C_{12}H_{25}OH$ |
| 9-13 | 43 | $C_9H_{19}\ C_6H_4-$ | $-CH_2-CH_2-$ | 12 | 28,5 | " | 28,5 | $C_9H_{19}C_6H_4-$ | $-CH_2-CH_2-$ | 4,8,10,13 bzw. 15 | - |
| 14 | 10 | $C_9H_{19}-C_6H_4-$ | $-CH_2-CH_2-$ | 12 | 60 | " | 30 | $C_{12}H_{25}/C_{14}H_9$ | $-CH_2-CH_2-$ | 5 | - |
| 15 | 43 | $C_9H_{19}-C_6H_4-$ | $-CH_2-CH_2-$ | 12 | 28,5 | " | 28,5 | $C_{12}H_{25}/C_{14}H_9$ | $-CH_2-CH_2-$ | 5 | - |

Die Mischungen 11 - 13 werden nicht beansprucht, sie sind zum Vergleich mit aufgeführt

Tabelle 1

Bildung einer homogenen Dispersion im Salinitätsbereich 100 - 200 g/l. Temperatur: 60°C

| Mischung | Salz | Bereich der homogenen Dispersion Salinität g/l untere Grenze | obere Grenze |
|---|---|---|---|
| 4 | NaCl | 150 | mehr als 200 |
| 5 | NaCl | weniger als 100 | 170 |
| 6 | NaCl | weniger als 100 | mehr als 200 |
| 7 | M.L.S. | weniger als 100 | mehr als 200 |
| 8 | M.L.S. | weniger als 100 | 130 |

M.L.S. = Modell-Lagerstättensalz

Tabelle 2

Adsorption an Quarz bei 60°C

| Mischung | Salz | Salinität g/l | spezifische Adsorption a'.mg /g a) Ethersulfonat | b) Alkansulfonat | c) Nichtionisches Tensid |
|---|---|---|---|---|---|
| 14 | M.L.S. | 140 | 0,85 | 1,05 | 1,15 |
| 15 | M.L.S. | 170 | 1,05 | 0,95 | 1,50 |
| Tenside der Mischungen 14 und 15 jeweils für sich allein | - | 0 | 0,15 | < 0,1 | 1,30 |

## Patentansprüche

1. Wäßrige Tensid-Einstellungen enthaltend ein Tensidgemisch aus
a) 5 bis 80, vorzugsweise 10 bis 70 Gew.-% eines Ethersulfonats der Formel

$RO(AO)_mA'SO_3M$

wobei R $C_6$-$C_{20}$-Alkyl oder eine durch ein oder mehrere Alkylgruppen mit zusammen 6 bis 20 C-Atomen substituierte Phenylgruppe, A eine $-C_2H_4-$ oder $-C_3H_6-$Gruppe oder eine Mischung beider Gruppen, A' $-C_2H_4-$ oder $-C_3H_6-$, m eine Zahl von 6 bis 25, vorzugsweise von 8 bis 20 und M ein Alkalimetallatom oder Ammonium bedeuten,
b) 10 bis 90, vorzugsweise 25 bis 80 Gew.-% eines sek. $C_8$-$C_{22}$-Alkansulfonats, Petrolsulfonats, Olefinsulfonats oder deren Mischungen und
c) 2 bis 40, vorzugsweise 5 bis 30 Gew.-% eines $C_8$-$C_{22}$-Fettalkohols oder eines Polyglykolethers der Formel

$RO(AO)_nH$

wobei R $C_6$-$C_{20}$-Alkyl oder eine durch ein oder mehrere Alkylgruppen mit zusammen 6 bis 20 C-Atomen substituierte Phenylgruppe, A eine $-C_2H_4-$ oder $-C_3H_6-$Gruppe oder eine Mischung beider Gruppen und n eine Zahl von 1 bis (m-4) bedeuten, wobei die Anzahl der Oxalkyleinheiten in der Komponente c) um mindestens vier Einheiten geringer sein soll gegenüber den Oxalkyleinheiten in der Komponente a).

2. Wäßrige Tensideinstellungen nach Anspruch 1, dadurch gekennzeichnet, daß sie einen Fettalkohol oder Polyglykolether der Formel RO(AO)H enthalten, worin n eine Zahl von 1 bis m-5 bedeutet.

3. Verfahren zur Erhöhung der Ausbeute bei der Erdölförderung durch Tensidfluten, dadurch gekennzeichnet, daß man dem Flutwasser eine TensidEinstellung nach Anspruch 1 zugibt.

4. Verfahren nach Anspruch 2, dadurch gekennzeichnet, daß man dem Flutwasser die Tensid-Einstellung in einer Menge von 0,1 bis 10 Gew.-% zugibt.

## Claims

1. An aqueous surfactant formulation containing a surfactant mixture composed of
a) 5 to 80, preferably 10 to 70, % by weight of an ether-sulfonate of the formula
$RO(AO)_mA'SO_3M$
where R is $C_6$-$C_{20}$-alkyl or a phenyl group substituted by one or more alkyl groups having 6 to 20 carbon atoms in total, A is a $-C_2H_4-$ or $-C_3H_6-$ group or a mixture of the two groups, A' is $-C_2H_4-$ or $-C_3H_6-$, m is a number from 6 to 25, preferably from 8 to 20, and M is an alkali metal atom or ammonium,
b) 10 to 90, preferably 25 to 80, % by weight of a secondary $C_8$-$C_{22}$-alkanesulfonate, petroleum sulfonate, olefin sulfonate or mixtures thereof and
c) 2 to 40, preferably 5 to 30, % by weight of a $C_8$-$C_{22}$ fatty alcohol or of a polyglycol ether of the formula
$RO(AO)_nH$
where R is $C_6$-$C_{20}$-alkyl or a phenyl group substituted by one or more alkyl groups having 6 to 20 carbon atoms in total, A is a $-C_2H_4-$ or $-C_3H_6-$ group or a mixture of the two groups and n is a number from 1 to (m-4), where the number of the oxyalkyl units in component c) should be at least four units smaller than that of the oxyalkyl units in component a).

2. An aqueous surfactant formulation as claimed in claim 1, which contains a fatty alcohol or polyglycol ether of the formula $RO(AO)_nH$, wherein n is a number from 1 to m-5.

3. A process for increasing the yield in oil recovery by surfactant flooding, which comprises adding a surfactant formulation as claimed in claim 1 to the flooding water.

4. The process as claimed in claim 3, which comprises adding the surfactant formulation in a quantity of from 0.1 to 10% by weight to the flooding water.

## Revendications

1. Composition aqueuse de surfactifs contenant un mélange de surfactifs, constitué par
a) 5 à 80, avantageusement 10 à 70% en poids d'un oxysulfonate de formule
$RO(AO)_mA'SO_3M$
dans laquelle R représente un groupe alkyle en $C_6$ à $C_{20}$ ou un groupe phényle substitué par un ou plusieurs groupes alkyles ayant ensemble 6 à 20 atomes de carbone, A représente un groupe $-C_2H_4-$ ou $-C_3H_6-$ ou un mélange des deux groupes, A' représente $-C_2H_4-$ ou $-C_3H_6-$, m est un nombre valant 6 à 25, avantageusement 8 à 20, et M représente un atome de métal alcalin ou un groupe ammonium,

re comporte 8 à 22 atomes de carbone), d'un pétrole-sulfonate, d'un oléfine-sulfonate ou de leurs mélanges, et

c) 2 à 40, avantageusement 5 à 30% d'un alcool gras en $C_8$ à $C_{22}$ ou d'un poly(oxyde de glycol) de formule

$RO(AO)_nH$

dans laquelle R représente un groupe alkyle en $C_6$ à $C_{20}$ ou un groupe phényle substitué par un ou plusieurs groupes alkyles ayant ensemble 6 à 20 atomes de carbone, A représente un groupe $-C_2H_4-$ ou $-C_3H_6-$ ou un mélange des deux groupes, et n est un nombre valant 1 à (m-4), le nombre des motifs oxyalkyles présents dans le constituant c) devant être inférieur d'au moins 4 unités au nombre des motifs oxyalkyles du constituant a).

2. Compositions aqueuses de surfactifs selon la revendication 1, caractérisées en ce qu'elles contiennent un alcool gras ou un polyoxyglycol de formule $RO(AO)_nH$, dans laquelle n est un nombre valant de 1 à (m-5).

3. Procédé pour augmenter le rendement lors de l'extraction de récupération d'huile de pétrole par noyage par injection forcée de surfactif, procédé caractérisé en ce qu'on ajoute à l'eau d'injection forcée pour le noyage une composition de surfactif(s) selon la revendication 1.

4. Procédé selon la revendication 3, caractérisé en ce qu'on ajoute à l'eau de noyage par injection forcée la composition de surfactif en une quantité de 0,1 à 10% en poids.

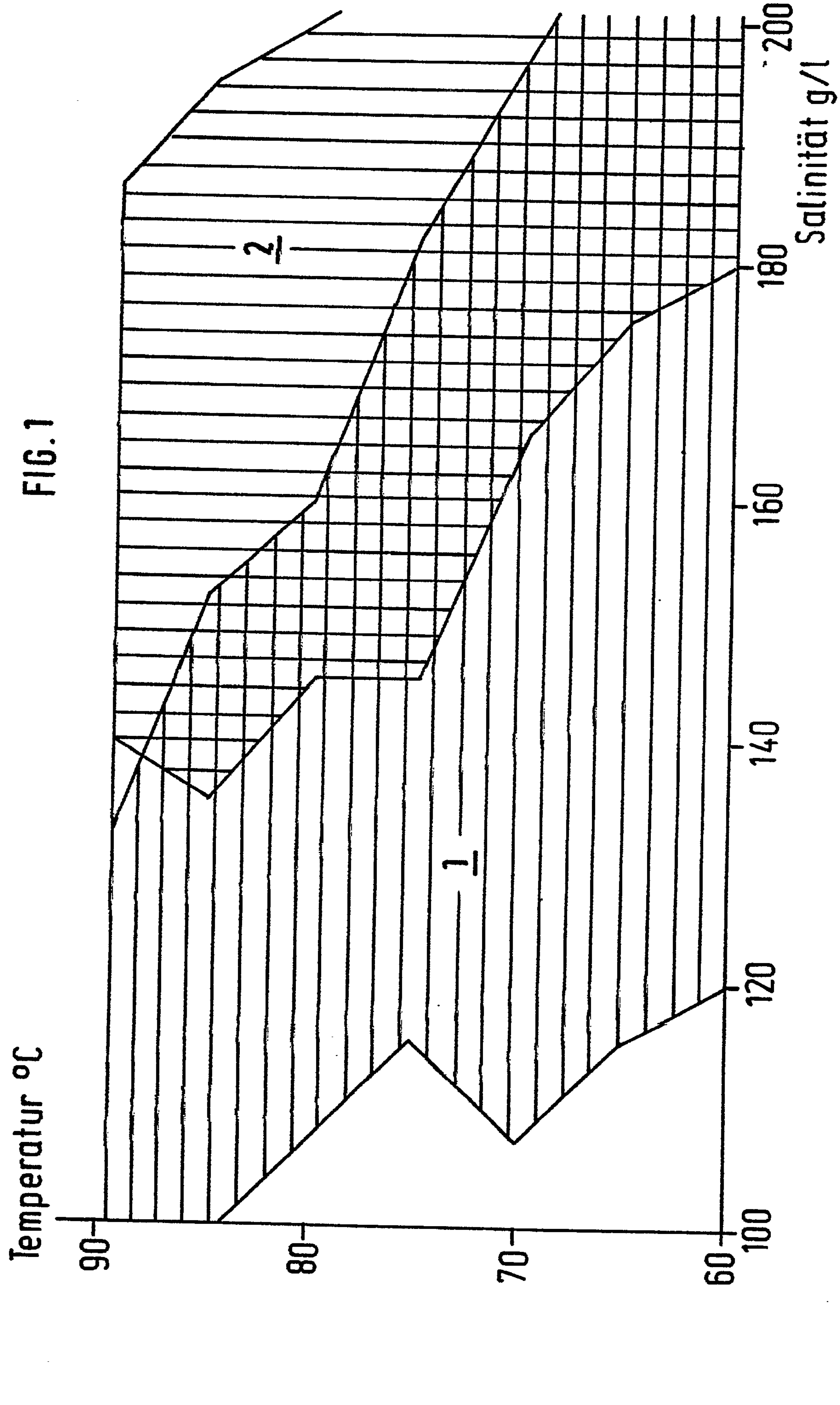
Temperatur °C
90
80
70
60
100
120
140
160
180
200
Salinität g/l
1
2

FIG. 1

FIG. 2

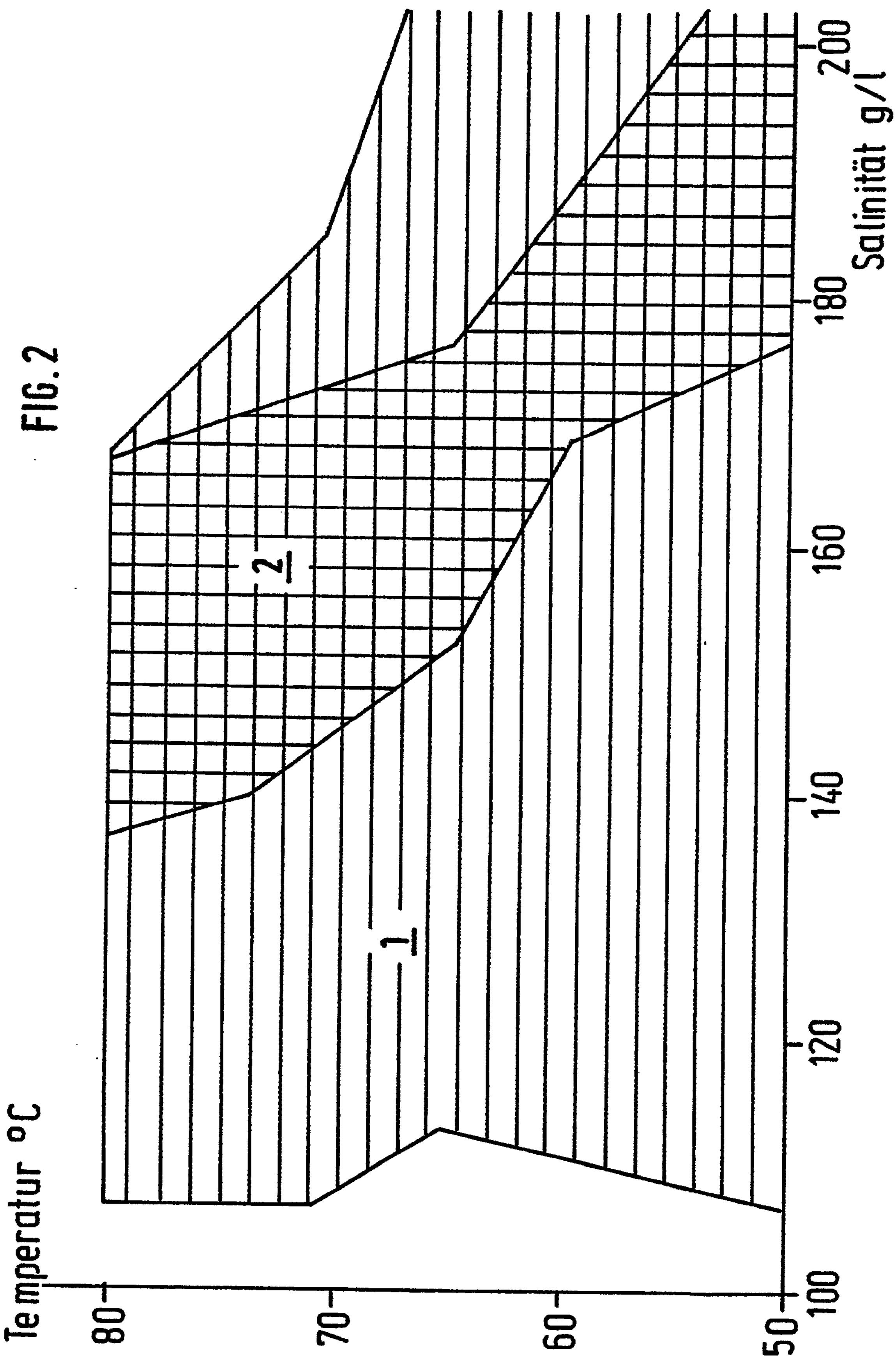
Temperatur °C
80
70
60
50
100
120
140
160
180
200
Salinität g/l
1
2

FIG. 3

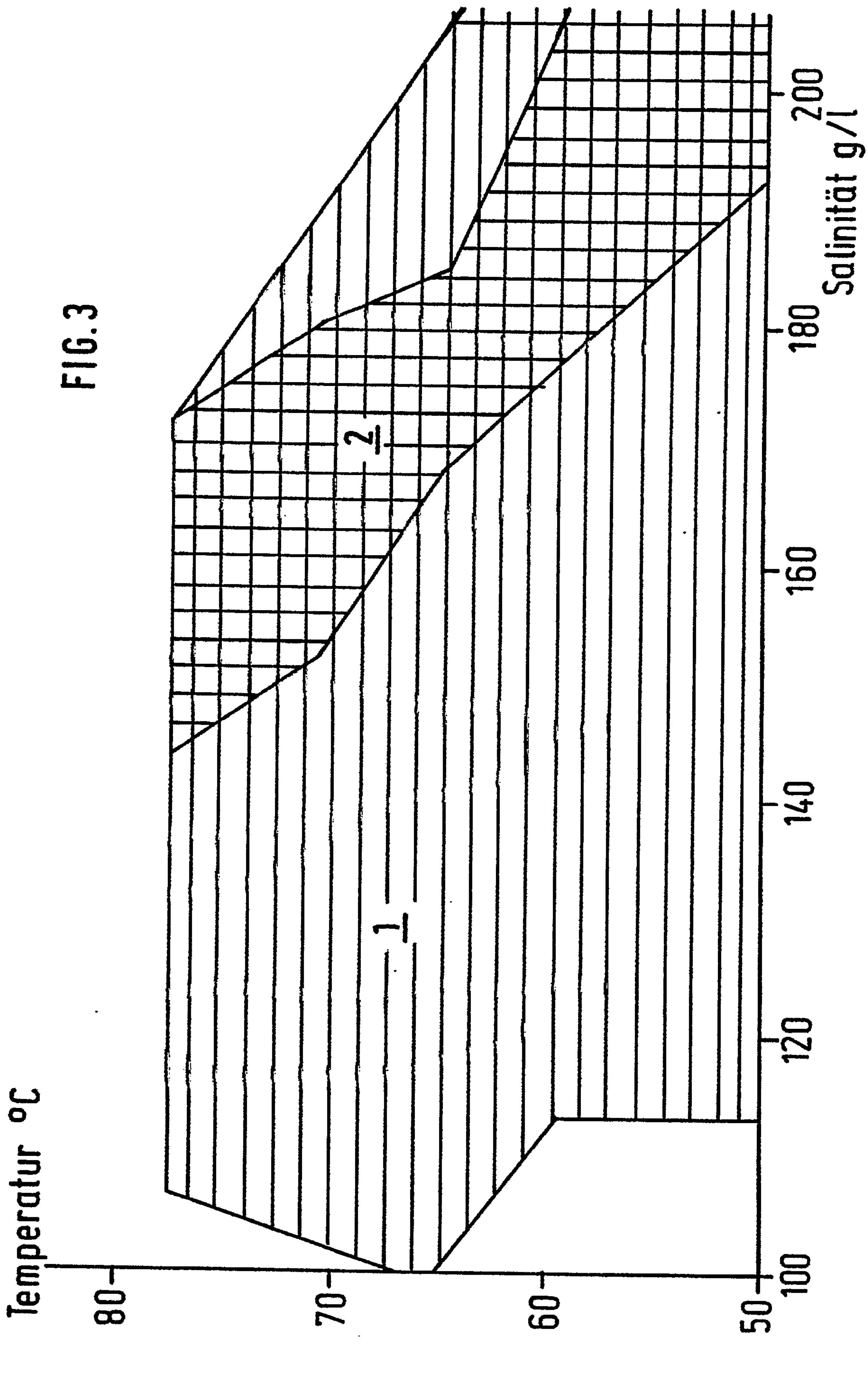

Temperatur °C
80
70
60
50
100
120
140
160
180
200
Salinität g/l
1
2

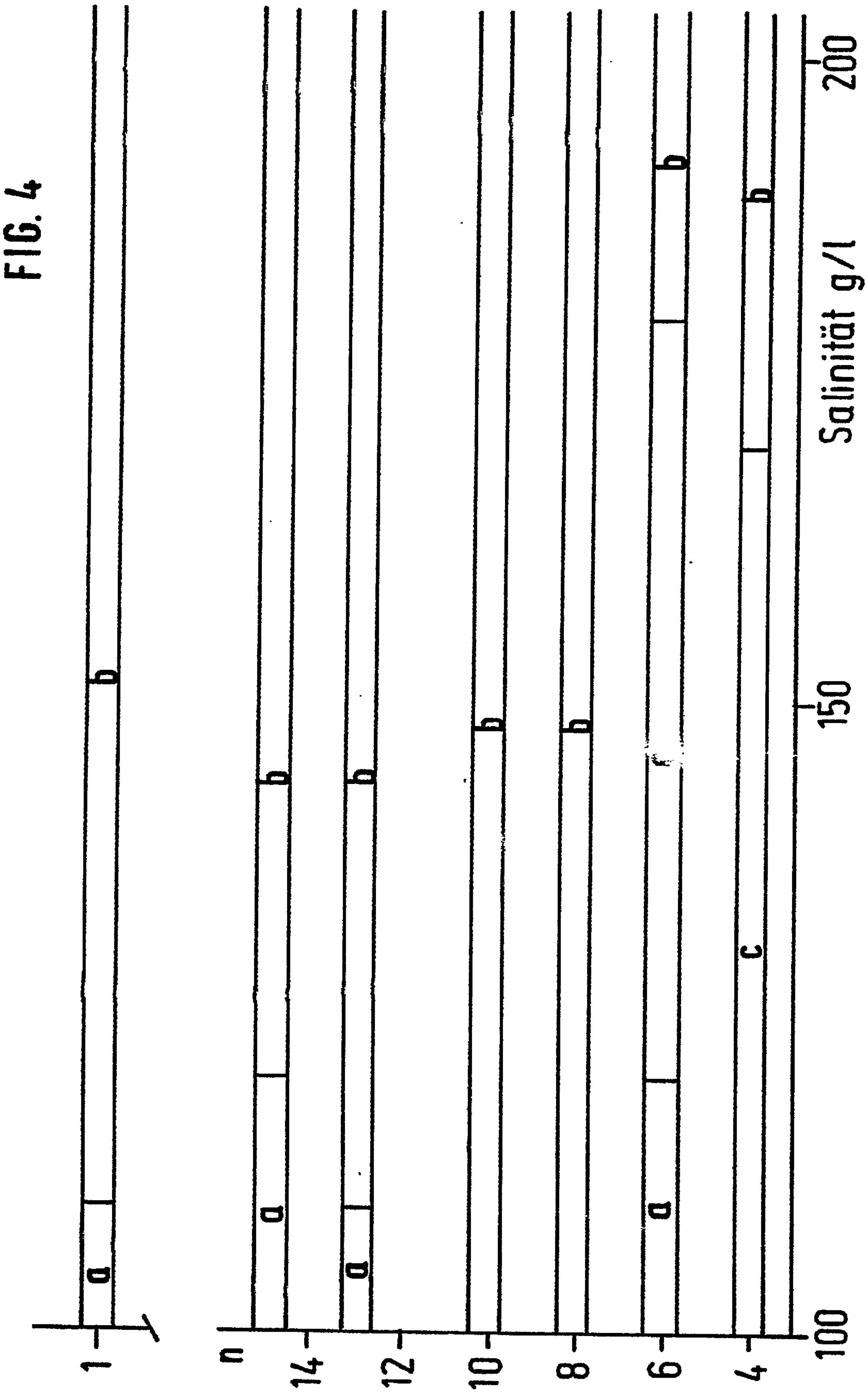


FIG. 4